(19) Europäisches Patentamt
European Patent Office
Office européen des brevets

(11) EP 3 664 102 A1

(12) EUROPEAN PATENT APPLICATION

(43) Date of publication:
10.06.2020 Bulletin 2020/24

(51) Int Cl.:
H01B 3/44 (2006.01)          H01B 9/02 (2006.01)
C08K 3/04 (2006.01)          C08K 3/22 (2006.01)
C08L 23/04 (2006.01)

(21) Application number: 19159594.1

(22) Date of filing: 27.02.2019

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 07.12.2018 KR 20180157200

(71) Applicant: LS Cable & System Ltd.
Anyang-si, Gyeonggi-do 14119 (KR)

(72) Inventors:
• YANG, Yi Seul
15815 Gyeonggi-do (KR)

• NAM, Jin Ho
06093 Seoul (KR)
• YOO, Jung Suk
16656 Gyeonggi-do (KR)
• JUNG, Hyun Jung
15851 Gyeonggi-do (KR)
• HEO, Sung Ik
15874 Gyeonggi-do (KR)

(74) Representative: advotec.
Patent- und Rechtsanwälte
Widenmayerstrasse 4
80538 München (DE)

Remarks:
Amended claims in accordance with Rule 137(2)
EPC.

(54) **INSULATION COMPOSITION AND DIRECT-CURRENT POWER CABLE HAVING INSULATING LAYER FORMED FROM THE SAME**

(57) Disclosed are an insulation composition that is capable of simultaneously preventing reductions in volume resistance, direct-current dielectric strength, and dielectric breakdown strength due to accumulation of space charges and in which the extent of extrusion of an insulating layer is not reduced, and a direct-current power cable having an insulating layer formed from the same.

Fig.1

EP 3 664 102 A1

**Description**

BACKGROUND OF THE INVENTION

Field of the Invention

The present invention relates to an insulation composition and a direct-current power cable having an insulating layer formed from the same. More particularly, the present invention relates to an insulation composition that is capable of simultaneously preventing reductions in volume resistance, direct-current dielectric strength, and dielectric breakdown strength due to accumulation of space charges and in which the extent of extrusion of an insulating layer is not reduced, and a direct-current power cable having an insulating layer formed from the same.

Description of the Related Art

In general, for a large-sized power system, of which large-capacity and long-distance power transmission is required, high-voltage power transmission, for which power transmission voltage is increased, is essential in consideration of a reduction of power loss, free selection of a construction site, and an increase of power transmission capacity.
Power transmission schemes are basically classified into an alternating-current power transmission scheme and a direct-current power transmission scheme. The direct-current power transmission scheme is a scheme for transmitting direct-current electrical energy. Specifically, the direct-current power transmission scheme is a scheme in which a power transmission side changes alternating-current power into an appropriate voltage, converts the voltage into direct-current power using a forward conversion device, and transmits the direct-current power to a power reception side through a power transmission line, and the power reception side converts the direct-current power into alternating-current power using an inverse conversion device.
In particular, the direct-current power transmission scheme is advantageous in that it is possible to transmit large-capacity power a long distance and to connect asynchronous power systems to each other. In addition, direct current is characterized by lower power loss and higher stability than alternating current in the case of long-distance power transmission. As a result, the direct-current power transmission scheme has come to be widely used.
In the case in which power transmission is performed using a high-voltage direct-current power cable, however, when the temperature of a cable insulator increases or when a negative impulse is generated or polarity is reversed, the insulative properties of the insulator are remarkably reduced. The known reason for this is that a group of charges is captured in the insulator or is not discharged, whereby space charges, which have a long lifespan, are accumulated.
The space charges may enhance an electric field in the insulator of the high-voltage direct-current power cable, whereby dielectric breakdown may be caused at a lower voltage than the initially designed dielectric breakdown voltage. Technology of adding inorganic particles to the insulator of a conventional power cable in order to trap space charges in the insulator, thereby reducing the space charges, is known.
However, the inorganic particles tend to cohere in the insulator. The cohered inorganic particles in the insulator cannot achieve the effect of reducing the space charges, and may rather deteriorate the mechanical and electrical characteristics of the insulator and the extent of extrusion of the insulator. For this reason, it is important to disperse the inorganic particles in the insulator.
However, the correlation between the degree of dispersion of the inorganic particles in the insulator and the reduction of space charges, the prevention of field enhancement, and the prevention of reduction of dielectric breakdown strength based thereon has not yet been established, whereby it is difficult to reduce space charges and to improve dielectric breakdown strength based on the adjustment of the degree of dispersion of the inorganic particles.
Therefore, there is urgent necessity for an insulation composition that is capable of simultaneously preventing reductions in volume resistance, direct-current dielectric strength, and dielectric breakdown strength due to accumulation of space charges through accurate control of the degree of dispersion of inorganic particles in a cable insulator and in which the extent of extrusion of an insulating layer is not reduced, and a direct-current power cable having an insulating layer formed from the same.

SUMMARY OF THE INVENTION

Therefore, the present invention has been made in view of the above problems, and it is an object of the present invention to provide an insulation composition that is capable of simultaneously preventing reductions in volume resistance, direct-current dielectric strength, and dielectric breakdown strength due to accumulation of space charges, and a direct-current power cable having an insulating layer formed from the same.
It is another object of the present invention to provide an insulation composition in which the extent of extrusion of an insulating layer is not reduced, and a direct-current power cable having an insulating layer formed from the same.

In accordance with an aspect of the present invention, the above and other objects can be accomplished by the provision of an insulation composition including a base resin and inorganic nanoparticles included in the base resin, wherein the density of inorganic nanoparticles included in a square unit area having a horizontal length of 1 mm and a vertical length of 1 mm of an arbitrary fracture surface of an insulation sample formed from the insulation composition, and each of which has a converted diameter of 1 $\mu$m or more, is 1 to 300 ea/mm$^2$, and the degree of dispersion ($D_{0.1}$) of the arbitrary fracture surface, defined by Equation 1 below, is 0.01 to 0.2.

$$[Equation\ 1]$$

$$D_{0.1} = \frac{0.2}{\sqrt{2\Pi}} \frac{\mu}{\sigma}$$

In Equation 1 above,

$\mu$ is an average area of the inorganic nanoparticles, and
$\sigma$ is a standard deviation in the average area of the inorganic nanoparticles.

The content of the inorganic nanoparticles may be 0.1 to 5 wt% based on the total weight of the insulation composition.
The field enhancement factor (FEF) of the insulation sample formed from the insulation composition, defined by Equation 2 below, may be 150 % or less.

$$[Equation\ 2]$$

$$FEF\ =\ (maximally\ increased\ electric\ field\ in$$

$$insulation\ sample/electric\ field\ applied\ to\ insulation$$

$$sample)*100$$

In Equation 2 above,

the electric field applied to the insulation sample is a DC electric field of, for example, 50 kV/mm, and
the maximally increased electric field in the insulation sample is the maximum among increased electric field values
when the DC electric field is applied for an hour.

Each of the inorganic nanoparticles may include at least one selected from the group consisting of magnesium oxide (MgO), zinc oxide (ZnO), silicon oxide ($SiO_2$), aluminum oxide ($Al_2O_3$), titanium oxide ($TiO_2$), carbon black, a carbon nanotube, graphene, and silicon carbide (SiC).
Each of the inorganic nanoparticles may have a size of 1 to 100 nm and may have a cubic shape.
The surface of each of the inorganic nanoparticles may be reformed so as to become hydrophobic.
The base resin may be an olefin homopolymer or copolymer resin.
The base resin may include a low-density polyethylene resin.
The insulation composition may further include 0.5 to 2 wt% of a cross-linking agent, 0.1 to 1 wt% of an antioxidant, and 0.1 to 1 wt% of a scorch retarder, based on the total weight of the insulation composition.
In accordance with another aspect of the present invention, there is provided a power cable including a conductor, an inner semiconductive layer disposed so as to surround the conductor, an insulating layer disposed so as to surround the inner semiconductive layer, the insulating layer being formed from the insulation composition described above, an outer semiconductive layer disposed so as to surround the insulating layer, and a shielding layer disposed so as to surround the outer semiconductive layer.
The inner semiconductive layer or the outer semiconductive layer may include carbon black, and the inner semiconductive layer or the outer semiconductive layer may further include 0.3 to 5 wt% of a nucleating agent, including either or both of glycerin fatty acid ester and decaglycerin fatty acid ester, based on 100 wt% of the base resin.

The inner semiconductive layer or the outer semiconductive layer may further include 0.1 to 1 wt% of alpha methyl styrene dimer (AMSD), as a scorch retarder, based on 100 wt% of the base resin.

BRIEF DESCRIPTION OF THE DRAWINGS

The above and other objects, features and other advantages of the present invention will be more clearly understood from the following detailed description taken in conjunction with the accompanying drawings, in which:

FIG. 1 is a view schematically showing the cross-sectional structure of a direct-current power cable according to the present invention; and
FIG. 2 is a view schematically showing the longitudinal-sectional structure of the direct-current power cable according to the present invention.

DETAILED DESCRIPTION OF THE INVENTION

Hereinafter, preferred embodiments of the present invention will be described in detail with reference to the accompanying drawings. However, the present invention is not limited to the embodiments described herein and may be variously modified. The embodiments described herein are provided to allow those skilled in the art to thoroughly and completely understand the disclosed content and to sufficiently convey the scope of the present invention to those skilled in the art. In the drawings, the same or similar elements are denoted by the same reference numerals even when they are depicted in different drawings.

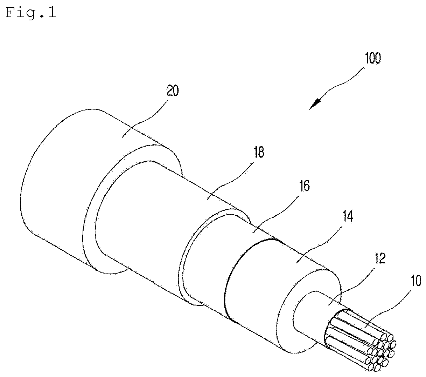

FIG. 1 is a view schematically showing the sectional structure of an embodiment of a direct-current power cable according to the present invention. As shown in FIG. 1, the direct-current power cable, denoted by reference numeral 100, according to the present invention may include a central conductor 10, an inner semiconductive layer 12 disposed so as to surround the central conductor 10, an insulating layer 14 disposed so as to surround the inner semiconductive layer 12, an outer semiconductive layer 16 disposed so as to surround the insulating layer 14, a shielding layer 18 disposed so as to surround the outer semiconductive layer 16, the shielding layer 18 being made of a metal sheath or a neutral wire for achieving electrical shielding and defining the path along which a short-circuit current returns, and an outer covering 20 disposed so as to surround the shielding layer 18.

The central conductor 10 may be made of copper or aluminum, preferably copper. In addition, the central conductor 10 may be formed of a single wire having a conductor waterproofing function, such as a watertight compound or watertight tape, or a twisted wire formed by twisting a plurality of conductive wires. The diameter of the central conductor 10, the diameter of each of the conductive wires constituting the twisted wire, etc. may differ depending on the power transmission voltage, usage, etc. of a direct-current power cable including the same, and may be appropriately selected by those skilled in the art. For example, in the case in which the direct-current power cable according to the present invention is used for an application that requires layering and flexibility, such as a submarine cable, the central conductor 10 may be formed of a twisted wire, which exhibits excellent flexibility, rather than a single wire.

The inner semiconductive layer 12 is disposed between the central conductor 10 and the insulating layer 14 in order to perform a function of removing an air layer, which causes the central conductor 10 and the insulating layer 14 to become separated from each other, and a function of alleviating local concentration of an electric field. Meanwhile, the outer semiconductive layer 16 performs a function of applying a uniform electric field to the insulating layer 14, a function of alleviating local concentration of an electric field, and a function of protecting the insulating layer 14 from the outside.

In general, each of the inner semiconductive layer 12 and the outer semiconductive layer 16 is formed by extruding a semiconductive composition configured such that conductive particles, such as carbon black, carbon nanotubes, carbon nanoplates, or graphite, are dispersed in a base resin and such that a cross-linking agent, an antioxidant, a scorch retarder, etc. are additionally added to the base resin.

Here, an olefin-based resin, similar to the base material that is applied to the insulation composition of the insulating layer 14, a description of which will follow, in order to increase the force of adhesion between each of the semiconductive layers 12 and 16 and the insulating layer 14, may be used as the base resin. Specifically, olefin and a polar monomer, such as ethylene vinyl acetate (EVA), ethylene methyl acrylate (EMA), ethylene methyl methacrylate (EMMA), ethylene ethyl acrylate (EEA), ethylene ethyl methacrylate (EEMA), ethylene (iso)propyl acrylate (EPA), ethylene (iso)propyl methacrylate (EPMA), ethylene butyl acrylate (EBA), or ethylene butyl methacrylate (EBMA), may be used as the base resin in consideration of compatibility with the conductive particles.

The semiconductive composition, which forms each of the inner and outer semiconductive layers 12 and 16, may include 45 to 70 wt% of the carbon black, as the conductive particles, based on 100 wt% of the base resin thereof. If the content of the conductive particles is less than 45 wt%, sufficient semiconductive characteristics are not realized. If the content of the conductive particles is more than 70 wt%, on the other hand, the extent of extrusion of each of the inner and outer semiconductive layers 12 and 16 is reduced, whereby surface characteristics are deteriorated or the productivity of a cable is reduced.

The cross-linking agent may be a silane-based cross-linking agent or an organic peroxide-based cross-linking agent, such as dicumyl peroxide, benzoyl peroxide, lauroyl peroxide, t-butyl cumyl peroxide, di(t-butyl peroxy isopropyl) benzene, 2,5-dimethyl-2,5-di(t-butyl peroxy) hexane, or di-t-butyl peroxide, depending on the cross-linking scheme of the base resin included in each of the semiconductive layers 12 and 16.

The content of the cross-linking agent may be accurately adjusted so as to become 0.1 to 5 wt%, preferably 0.1 to 1.5 wt%, based on 100 wt% of the base resin. If the content of the cross-linking agent is more than 5 wt%, the content of cross-linking byproducts, inevitably generated at the time of cross-linking of the base resin included in the semiconductive composition, becomes excessive. The cross-linking byproducts move into the insulating layer 14 via the interface between each of the semiconductive layers 12 and 16 and the insulating layer 14, whereby heterocharges are accumulated. As a result, field enhancement is increased, and therefore the dielectric breakdown voltage of the insulating layer 14 is reduced. If the content of the cross-linking agent is less than 0.1 wt%, on the other hand, the extent of cross-linking is insufficient, whereby the mechanical properties, heat resistance, etc. of each of the semiconductive layers 12 and 16 may be reduced.

The thickness of each of the inner and outer semiconductive layers 12 and 16 may differ depending on the power transmission voltage of the cable. For example, in the case of a 345 kV power cable, the thickness of the inner semiconductive layer 12 may be 1.0 to 2.5 mm, and the thickness of the outer semiconductive layer 16 may be 1.0 to 2.5 mm.

Each of the inner and outer semiconductive layers 12 and 16 may further include either or both of 0.3 to 5 wt% of a nucleating agent for improving the interface characteristics between the insulating layer 14 and each of the semiconductive layers 12 and 16 in order to improve the withstand voltage breakdown characteristics of the cable, such as glycerin fatty acid ester or decaglycerin fatty acid ester, as a nonionic surfactant, and 0.1 to 1 wt% of a scorch retarder, such as alpha methyl styrene dimer (AMSD), based on 100 wt% of the base resin.

The insulating layer 14 may be formed by extruding an insulation composition including a base resin and inorganic nanoparticles added to and dispersed in the base resin. Here, the base resin is not particularly restricted, and may include, for example, an olefin homopolymer or copolymer resin, particularly a polyolefin resin, such as polyethylene or polypropylene, a block or random copolymer resin of ethylene or propylene and another $\alpha$-olefin, or a thermoplastic elastomer.

The polyethylene resin may be ultra-low-density polyethylene (ULDPE), low-density polyethylene (LDPE), linear low-density polyethylene (LLDPE), middle-density polyethylene (MDPE), high-density polyethylene (HDPE), or a combination thereof.

The inorganic nanoparticles, which are added to and dispersed in the base resin, may include metal or nonmetal oxide, such as magnesium oxide (MgO), zinc oxide (ZnO), silicon oxide ($SiO_2$), aluminum oxide ($Al_2O_3$), or titanium oxide ($TiO_2$), or inorganic carbon particles, such as carbon black, carbon nanotubes, graphene, or silicon carbide (SiC).

In the case in which the inorganic nanoparticles are added to the base resin, the inorganic nanoparticles are injected into the insulating layer from the conductor of the cable or traps space charges formed in the insulating layer due to the cross-linking byproducts such that the intensity of an electric field in the vicinity of the conductor is increased due to the space charges, whereby a reduction in the dielectric breakdown strength of the insulating layer is prevented.

In general, the permittivity of the inorganic nanoparticles is greater than the permittivity of the base resin. For example, the permittivity of magnesium oxide, as the inorganic nanoparticles, is about 10, whereas the permittivity of low-density polyethylene (LDPE), as the base resin, is about 2.2 to 2.3. Consequently, it is natural that the permittivity of the insulation composition, configured such that the inorganic nanoparticles are added to the base resin, is higher than the permittivity of the base resin.

However, the inventors of the present application have experimentally found that, in the case in which the size of each of the inorganic nanoparticles is a nano-scale level, for example, 1 nm to 100 $\mu$m, preferably 1 to 100 nm, the permittivity of the insulation composition becomes lower than the permittivity of the base resin, and the dielectric breakdown voltage of the insulating layer is increased, unlike the case in which micro-scale inorganic particles are added.

The reason that, in the case in which the size of each of the inorganic nanoparticles is a nano-scale level, the permittivity of the insulation composition becomes lower than the permittivity of the base resin has not been verified, but is presumed to result from a so-called "nano effect" and is also presumed to result from interface stabilization in the base resin achieved as the size of each of the inorganic nanoparticles is adjusted to a nano-scale level.

That is, as the size of each of the inorganic nanoparticles is adjusted to a nano-scale level, the permittivity of the insulation composition including the same is reduced, and the dielectric breakdown voltage of the insulating layer, which is formed from the insulation composition, is increased, whereby the lifespan of a cable including the insulating layer may be increased.

Each of the inorganic nanoparticles may have, for example, a terraced shape, a cubic shape, a rod shape, or an edgeless shape. For interface stabilization in the base resin, each of the inorganic nanoparticles may have a cubic shape.

In general, the base resin is hydrophobic, whereas the surface of each of the inorganic nanoparticles is hydrophilic. In order to uniformly disperse the inorganic nanoparticles in the base resin, therefore, it is necessary to reform the surface of each of the inorganic nanoparticles so as to become hydrophobic. For example, the surface of each of the inorganic nanoparticles may be coated with a fatty-acid- or silane-based surface treatment agent such that the surface of each of the inorganic nanoparticles is treated so as to become hydrophobic.

The content of the inorganic nanoparticles may be 0.1 to 5 wt% based on the total weight of the insulation composition. If the content of the inorganic nanoparticles is less than 0.1 wt%, the effect of reducing the space charges in the insulating layer 14 is slight. If the content of the inorganic nanoparticles is more than 5 wt%, on the other hand, the extent of extrusion of the insulating layer 14 is reduced. In particular, the effect of reducing the space charges in the insulating layer 14 is rather reduced due to cohesion of the inorganic nanoparticles in the insulating layer 14, whereby the mechanical and electrical characteristics of the insulating layer 14 may be greatly reduced.

The inventors of the present application have experimentally found that, on the assumption that the content of the inorganic nanoparticles is 0.1 to 5 wt% based on the total weight of the insulation composition and that the density of inorganic nanoparticles included in a unit area, i.e. an arbitrary square having a horizontal length of 1 mm and a vertical length of 1 mm, of an arbitrary fracture surface of an insulation sample formed from the insulation composition, and each of which has a converted diameter, i.e. the diameter of a circle having the same sectional area as the sectional area of a noncircular particle, of 1 $\mu$m or more, is 1 to 300 ea/mm$^2$, in the case in which the degree of dispersion $D_{0.1}$ of the arbitrary fracture surface, defined by Equation 1 below, is 0.01 to 0.2, the field enhancement factor due to accumulation of space charges in the insulating layer 14 is minimized, and therefore the dielectric breakdown voltage of the insulating layer 14 is maximized. The present invention has been completed based on these findings.

$$[\text{Equation 1}]$$

$$D_{0.1} = \frac{0.2}{\sqrt{2\Pi}}\frac{\mu}{\sigma}$$

In Equation 1 above,

$\mu$ is the average area of the inorganic nanoparticles, and
$\sigma$ is the standard deviation in the average area of the inorganic nanoparticles.

If the degree of dispersion $D_{0.1}$ is less than 0.01, which means that the inorganic nanoparticles are not dispersed but cohere in the insulating layer 14, the effect of reducing the accumulation of the space charges is slight, whereby field enhancement may be increased, and therefore dielectric breakdown strength may be reduced. If the degree of dispersion $D_{0.1}$ is more than 0.2, the content of the inorganic nanoparticles is insufficient, whereby the effect of reducing the accumulation of the space charges is not sufficiently achieved.

The insulation sample may be an insulation sample formed by extruding the insulation composition or an insulating layer sample extracted from an insulating layer of a cable, the insulating layer being formed from the insulation composition. The arbitrary fracture surface of the insulation sample may be a section of the insulation sample fractured at the time of tensioning the insulation sample.

Consequently, the field enhancement factor (FEF) of the insulation sample, defined by Equation 2 below, may be 150 % or less, for example, 100 to 150 %.

$$[\text{Equation 2}]$$

```
FEF    =    (maximally   increased   electric   field   in insulation   sample/electric   field   applied   to   insulation

sample)*100
```

In Equation 2 above,

the electric field applied to the insulation sample is a DC electric field of, for example, 50 kV/mm, and
the maximally increased electric field in the insulation sample is the maximum among increased electric field values
when the DC electric field is applied for an hour.

The insulation composition may further include additives, such as a cross-linking agent, an antioxidant, and a scorch retarder, in addition to the inorganic nanoparticles. The cross-linking agent may differ depending on the cross-linking scheme of the insulation composition. For example, in the case of chemical cross-linking, the cross-linking agent may include organic peroxide, such as dicumyl peroxide, and may be included so as to account for 0.5 to 2 wt% based on the total weight of the insulation composition.

If the content of the cross-linking agent is less than 0.5 wt%, the mechanical properties, heat resistance, etc. of the insulating layer formed from the insulation composition may be insufficient. If the content of the cross-linking agent is more than 2 wt%, on the other hand, the extent of cross-linking is excessive, whereby scorching may occur due to early cross-linking. In addition, cross-linking byproducts are excessively generated, whereby space charges may be accumulated. As a result, volume resistance may be reduced, and dielectric breakdown voltage may be reduced.

The antioxidant performs a function of retarding deterioration of the insulating layer formed from the insulation composition due to oxidation thereof, and may include, for example, a phenol-based, quinine-based, or amine-based antioxidant. The content of the antioxidant may be 0.1 to 1 wt% based on the total weight of the insulation composition.

The scorch retarder performs a function of retarding scorching due to the additional acquisition of cross-linking characteristics at the time of cross-linking the insulation composition and due to extrusion of the insulation composition for a long time, and may be, for example, AMSD (a-methyl styrene dimer). The content of the scorch retarder may be 0.1 to 1 wt% based on the total weight of the insulation composition.

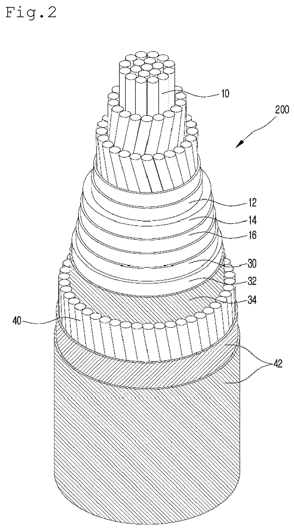

FIG. 2 is a view schematically showing the sectional structure of another embodiment of the direct-current power cable according to the present invention. Specifically, FIG. 2 is a view schematically showing the sectional structure of a submarine cable.

As shown in FIG. 2, the direct-current power cable, denoted by reference numeral 200, according to the present invention may include a conductor 10, an inner semiconductive layer 12, an insulating layer 14, and an outer semiconductive layer 16 similar to those of the previous embodiment shown in FIG. 1, and a duplicate description of which will be omitted.

If foreign matter, such as water, permeates into the outer semiconductive layer 16, the insulation performance of the insulating layer 14 is reduced. In order to prevent this, a metal sheath made of lead, i.e. a so-called "lead-covered sheath" 30, is provided outside the outer semiconductive layer 16.

Furthermore, a sheath 32 made of a resin, such as polyethylene, and a bedding layer 34 for preventing contact with water are provided outside the lead-covered sheath 30. A steel wire armor 40 may be provided on the bedding layer 34. The steel wire armor 40 is provided outside the cable in order to increase the mechanical strength of the cable and thus to protect the cable from the submarine environment.

A subbing 42 is provided outside the steel wire armor 40, i.e. outside the cable. The subbing 42 is provided outside the cable in order to protect the inner components of the cable 200. Particularly, in the case of a submarine cable, the subbing 42 exhibits sufficient weather resistance and mechanical strength to withstand the submarine environment, such as the seawater. For example, the subbing 42 may be made of polypropylene yarn.

[Examples]

1. Manufacture Example

Insulation samples formed by extruding an insulation composition according to the present invention and having degrees of dispersion $D_{0.1}$ and densities of inorganic nanoparticles shown in Table 1 below were manufactured.

[Table 1]

|  | Degree of dispersion ($D_{0.1}$) | Density (ea/mm$^2$) |
|---|---|---|
| Example 1 | 0.07 | 10.7 |
| Example 2 | 0.03 | 13.8 |
| Example 3 | 0.05 | 6.9 |
| Example 4 | 0.01 | 31.4 |
| Comparative Example 1 | 0.008 | 313.7 |

(continued)

|  | Degree of dispersion ($D_{0.1}$) | Density (ea/mm$^2$) |
|---|---|---|
| Comparative Example 2 | 0.005 | 340 |
| Comparative Example 3 | 0.02 | 374.6 |
| Comparative Example 4 | 0.009 | 290 |

2. Evaluation of physical properties

1) Evaluation of field enhancement factor (FEF)

Pulsed electro acoustic (PEA) evaluation was performed on the insulation samples according to Examples and Comparative Examples. Specifically, a DC electric field of 50 kV/mm was applied to the samples at room temperature for an hour, the application of the electric field was stopped, and the samples were short-circuited for an hour. After the DC electric field was applied to the samples and the samples were short-circuited, the charge density of the samples was measured using a LabView program.

In addition, integral values indicating an electric field in a graph showing charge density over time were calculated, and the maximum among the integral values was selected for use in calculating the field enhancement factor (FEF), defined by Equation 1 above.

2) Evaluation of direct-current dielectric breakdown strength (kV/mm)

DC voltage was applied to 20 insulation samples according to each of Examples and Comparative Examples while boosting the DC voltage, and dielectric breakdown voltage having a breakdown probability of 63.2 % was calculated through the Weibull distribution.

The results of evaluation of the field enhancement factor (FEF) and the direct-current dielectric breakdown strength are shown in Table 2 below.

[Table 2]

|  | Field enhancement factor (FEF) | Direct-current dielectric breakdown strength (kV/mm) |
|---|---|---|
| Example 1 | 143 | 350 |
| Example 2 | 150 | 370 |
| Example 3 | 149 | 310 |
| Example 4 | 150 | 300 |
| Comparative Example 1 | 173 | 165 |
| Comparative Example 2 | 177 | 150 |
| Comparative Example 3 | 148 | 180 |
| Comparative Example 4 | 180 | 250 |

It can be seen from Table 2 that, in the case of the insulation samples according to Comparative Examples 1 to 4, wherein the degree of dispersion $D_{0.1}$ of the inorganic nanoparticles was less than 0.01, which means that inorganic nanoparticles were not uniformly dispersed or cohered, whereby the density of inorganic nanoparticles, each having a converted diameter of 1 $\mu$m, which is great, was 300 ea/mm$^2$ or more, the field enhancement factor (FEF) due to accumulation of space charges exceeded 150 %, whereby direct-current dielectric breakdown voltage was greatly reduced.

In contrast, it can be seen that, in the case of the insulation composition according to the present invention, the degree of dispersion $D_{0.1}$ and the density of the inorganic nanoparticles were accurately controlled, and therefore the field enhancement factor (FEF) was adjusted so as to become 150 % or less due to the effect of reducing accumulation of space charges, whereby direct-current dielectric breakdown voltage was increased to 300 kV/mm.

As is apparent from the above description, the insulation composition according to the present invention has an excellent effect in that the degree of dispersion of the inorganic particles is accurately controlled in order to reduce the space charges in the insulating layer, thereby increasing the volume resistance, the direct-current dielectric strength, and the dielectric breakdown strength of the insulating layer, formed from the insulation composition and thus increasing the lifespan of the cable.

In addition, the insulation composition according to the present invention has an excellent effect in that the degree of dispersion of the inorganic particles is accurately controlled in order to improve the extent of extrusion of the insulating layer.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

**Claims**

1. An insulation composition comprising:

   a base resin; and
   inorganic nanoparticles included in the base resin, wherein
   a density of inorganic nanoparticles included in a square unit area having a horizontal length of 1 mm and a vertical length of 1 mm of an arbitrary fracture surface of an insulation sample formed from the insulation composition, and each of which has a converted diameter of 1 $\mu$m or more, is 1 to 300 ea/mm$^2$, and
   a degree of dispersion ($D_{0.1}$) of the arbitrary fracture surface, defined by Equation 1 below, is 0.01 to 0.2.

   [Equation 1]

   $$D_{0.1} = \frac{0.2}{\sqrt{2\Pi}} \frac{\mu}{\sigma}$$

   In Equation 1 above,

   $\mu$ is an average area of the inorganic nanoparticles, and
   $\sigma$ is a standard deviation in the average area of the inorganic nanoparticles.

2. The insulation composition according to claim 1, wherein a content of the inorganic nanoparticles is 0.1 to 5 wt% based on a total weight of the insulation composition.

3. The insulation composition according to claim 1 or 2, wherein a field enhancement factor (FEF) of the insulation sample formed from the insulation composition, defined by Equation 2 below, is 150 % or less.

   [Equation 2]

   FEF = (maximally increased electric field in insulation sample/electric field applied to insulation sample)*100

   In Equation 2 above,

   the electric field applied to the insulation sample is a DC electric field of, for example, 50 kV/mm, and
   the maximally increased electric field in the insulation sample is a maximum among increased electric field values when the DC electric field is applied for an hour.

4. The insulation composition according to any one of claims 1 to 3, wherein each of the inorganic nanoparticles comprises at least one selected from a group consisting of magnesium oxide (MgO), zinc oxide (ZnO), silicon oxide ($SiO_2$), aluminum oxide ($Al_2O_3$), titanium oxide ($TiO_2$), carbon black, a carbon nanotube, graphene, and silicon carbide (SiC).

5. The insulation composition according to any one of claims 1 to 4, wherein each of the inorganic nanoparticles has a size of 1 to 100 nm and has a cubic shape.

6. The insulation composition according to any one of claims 1 to 5, wherein a surface of each of the inorganic nanoparticles is reformed so as to become hydrophobic.

7. The insulation composition according to any one of claims 1 to 6, wherein the base resin is an olefin homopolymer or copolymer resin.

8. The insulation composition according to any one of claims 1 to 7, wherein the base resin comprises a low-density polyethylene resin.

9. The insulation composition according to any one of claims 1 to 8, further comprising:

0.5 to 2 wt% of a cross-linking agent;
0.1 to 1 wt% of an antioxidant; and
0.1 to 1 wt% of a scorch retarder,

based on a total weight of the insulation composition.

10. A power cable comprising:

a conductor;
an inner semiconductive layer disposed so as to surround the conductor;
an insulating layer disposed so as to surround the inner semiconductive layer, the insulating layer being formed from the insulation composition according to claim 1 or 2;
an outer semiconductive layer disposed so as to surround the insulating layer; and
a shielding layer disposed so as to surround the outer semiconductive layer.

11. The power cable according to claim 10, wherein
the inner semiconductive layer or the outer semiconductive layer comprises carbon black, and
the inner semiconductive layer or the outer semiconductive layer further comprises 0.3 to 5 wt% of a nucleating agent, comprising either or both of glycerin fatty acid ester and decaglycerin fatty acid ester, based on 100 wt% of the base resin.

12. The power cable according to claim 10 or 11, wherein the inner semiconductive layer or the outer semiconductive layer further comprises 0.1 to 1 wt% of alpha methyl styrene dimer (AMSD), as a scorch retarder, based on 100 wt% of the base resin.

**Amended claims in accordance with Rule 137(2) EPC.**

1. An insulation composition comprising:

a base resin; and
inorganic nanoparticles included in the base resin, wherein
a density of inorganic nanoparticles included in a square unit area having a horizontal length of 1 mm and a vertical length of 1 mm of an arbitrary fracture surface of an insulation sample formed from the insulation composition, and each of which has a converted diameter of 1 $\mu$m or more, is 1 to 300 ea/mm$^2$,
a degree of dispersion ($D_{0.1}$) of the arbitrary fracture surface, defined by Equation 1 below, is 0.01 to 0.2.

[Equation 1]

$$D_{0.1} = \frac{0.2}{\sqrt{2\Pi}} \frac{\mu}{\sigma}$$

In Equation 1 above,

$\mu$ is an average area of the inorganic nanoparticles, and
$\sigma$ is a standard deviation in the average area of the inorganic nanoparticles, and
wherein a field enhancement factor (FEF) of the insulation sample formed from the insulation composition,
defined by Equation 2 below, is 150 % or less.

[Equation 2]

FEF = (maximally increased electric field in insulation
sample/electric field applied to insulation sample)*100

In Equation 2 above,

the electric field applied to the insulation sample is a DC electric field of, for example, 50 kV/mm, and
the maximally increased electric field in the insulation sample is a maximum among increased electric field
values when the DC electric field is applied for an hour.

2. The insulation composition according to claim 1, wherein a content of the inorganic nanoparticles is 0.1 to 5 wt% based on a total weight of the insulation composition.

3. The insulation composition according to claim 1 or 2, wherein each of the inorganic nanoparticles comprises at least one selected from a group consisting of magnesium oxide (MgO), zinc oxide (ZnO), silicon oxide ($SiO_2$), aluminum oxide ($Al_2O_3$), titanium oxide ($TiO_2$), carbon black, a carbon nanotube, graphene, and silicon carbide (SiC) .

4. The insulation composition according to any one of claims 1 to 3, wherein each of the inorganic nanoparticles has a size of 1 to 100 nm and has a cubic shape.

5. The insulation composition according to any one of claims 1 to 4, wherein a surface of each of the inorganic nanoparticles is reformed so as to become hydrophobic.

6. The insulation composition according to any one of claims 1 to 5, wherein the base resin is an olefin homopolymer or copolymer resin.

7. The insulation composition according to any one of claims 1 to 6, wherein the base resin comprises a low-density polyethylene resin.

8. The insulation composition according to any one of claims 1 to 7, further comprising:

0.5 to 2 wt% of a cross-linking agent;
0.1 to 1 wt% of an antioxidant; and
0.1 to 1 wt% of a scorch retarder,

based on a total weight of the insulation composition.

9. A power cable comprising:

   a conductor;
   an inner semiconductive layer disposed so as to surround the conductor;
   an insulating layer disposed so as to surround the inner semiconductive layer, the insulating layer being formed from the insulation composition according to claim 1 or 2;
   an outer semiconductive layer disposed so as to surround the insulating layer; and
   a shielding layer disposed so as to surround the outer semiconductive layer.

10. The power cable according to claim 9, wherein
    the inner semiconductive layer or the outer semiconductive layer comprises carbon black, and
    the inner semiconductive layer or the outer semiconductive layer further comprises 0.3 to 5 wt% of a nucleating agent, comprising either or both of glycerin fatty acid ester and decaglycerin fatty acid ester, based on 100 wt% of the base resin.

11. The power cable according to claim 9 or 10, wherein the inner semiconductive layer or the outer semiconductive layer further comprises 0.1 to 1 wt% of alpha methyl styrene dimer (AMSD), as a scorch retarder, based on 100 wt% of the base resin.

Fig.1

Fig.2

Europäisches Patentamt
European Patent Office
Office européen des brevets

# EUROPEAN SEARCH REPORT

Application Number

EP 19 15 9594

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 336 858 A1 (SUMITOMO ELECTRIC INDUSTRIES [JP]) 20 June 2018 (2018-06-20) * claims 1-11; figure 1; examples 1-15; tables 1-3 * | 1-12 | INV. H01B3/44 H01B9/02 |
| X | WO 2011/122742 A1 (LS CABLE LTD [KR]; KIM YOON-JIN [KR] ET AL.) 6 October 2011 (2011-10-06) * page 1 - page 7; claims 1-5; examples 1-3; tables 1-2 * | 1-12 | ADD. C08K3/04 C08K3/22 C08L23/04 |
| X | WO 2017/149087 A1 (BOREALIS AG [AT]) 8 September 2017 (2017-09-08) * page 1 - page 85; claims 1-26; figure 16b * | 1-12 | |
| X | JP 2006 291022 A (J POWER SYSTEMS CORP) 26 October 2006 (2006-10-26) * abstract * | 1-12 | |
| X | CN 106 700 195 A (UNIV SHANGHAI JIAOTONG) 24 May 2017 (2017-05-24) * abstract * | 1-12 | TECHNICAL FIELDS SEARCHED (IPC) H01B C08K C08L |

The present search report has been drawn up for all claims

| Place of search | Date of completion of the search | Examiner |
|---|---|---|
| Munich | 2 September 2019 | Marsitzky, Dirk |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 15 9594

02-09-2019

| Patent document cited in search report | | Publication date | Patent family member(s) | | Publication date |
|---|---|---|---|---|---|
| EP 3336858 | A1 | 20-06-2018 | CN | 107112089 A | 29-08-2017 |
| | | | CN | 108028098 A | 11-05-2018 |
| | | | EP | 3336857 A1 | 20-06-2018 |
| | | | EP | 3336858 A1 | 20-06-2018 |
| | | | JP | WO2017026391 A1 | 31-05-2018 |
| | | | KR | 20180039635 A | 18-04-2018 |
| | | | KR | 20180042822 A | 26-04-2018 |
| | | | US | 2017330645 A1 | 16-11-2017 |
| | | | US | 2018218804 A1 | 02-08-2018 |
| | | | WO | 2017026039 A1 | 16-02-2017 |
| | | | WO | 2017026391 A1 | 16-02-2017 |
| WO 2011122742 | A1 | 06-10-2011 | CN | 102812521 A | 05-12-2012 |
| | | | EP | 2436014 A1 | 04-04-2012 |
| | | | KR | 20110110928 A | 10-10-2011 |
| | | | US | 2012000694 A1 | 05-01-2012 |
| | | | WO | 2011122742 A1 | 06-10-2011 |
| WO 2017149087 | A1 | 08-09-2017 | CN | 109074904 A | 21-12-2018 |
| | | | EP | 3424055 A1 | 09-01-2019 |
| | | | KR | 20180121950 A | 09-11-2018 |
| | | | WO | 2017149087 A1 | 08-09-2017 |
| JP 2006291022 | A | 26-10-2006 | NONE | | |
| CN 106700195 | A | 24-05-2017 | NONE | | |

EPO FORM P0459

For more details about this annex : see Official Journal of the European Patent Office, No. 12/82